# EUROPÄISCHE PATENTSCHRIFT

(11) **EP 0 894 055 B1**
(45) Veröffentlichungstag und Bekanntmachung des Hinweises auf die Patenterteilung: **25.10.2000**
(21) Anmeldenummer: 97922824.4
(22) Anmeldetag: 07.04.1997
(51) Int. Cl.: B60L 5/19

(54) **SCHIENENFAHRZEUG**
RAIL VEHICLE
VEHICULE SUR RAILS

(30) Priorität: 18.04.1996 DE 19615341
(43) Veröffentlichungstag der Anmeldung: 03.02.1999
(73) Patentinhaber: SIEMENS AKTIENGESELLSCHAFT, 80333 München (DE)
(72) Erfinder: DÜLL, Hans-Jürgen, D-91094 Langensendelbach (DE)
(86) Internationale Anmeldenummer: DE9700702
(87) Internationale Veröffentlichungsnummer: WO9739911

(56) Entgegenhaltungen:
- WO-A-97/03858
- DE-A- 2 243 405
- DE-A- 3 232 153
- PATENT ABSTRACTS OF JAPAN vol. 17, no. 479 (M-1471), 31.August 1993 & JP 05 115104 A (RAILWAY TECHNICAL RES INST), 7.Mai 1993,

## Beschreibung

### Schienenfahrzeug

Die Erfindung betrifft ein Schienenfahrzeug.

Ein derartiges Schienenfahrzeug, das wenigstens einen neigbaren Wagenkasten mit einem Stromabnehmer umfaßt, ist durch die EP 0 485 273 A1 bekannt. Im bekannten Fall stützt sich der Wagenkasten über jeweils einen Pendelträger und eine Federung auf zwei Drehgestellen ab. Bei Kurvenfahrt ist der Wagenkasten um einen Neigewinkel α gegenüber dem Fahrweg (Gleisoberkante) neigbar. Der Neigewinkel α beinhaltet damit auch die Neigung des Pendelträgers gegenüber dem Fahrweg, die als Wankwinkel β definiert ist. Der Wankwinkel β, der die Einfederung des Wagenkastens beschreibt, hängt auch von der bei Kurvenfahrt auftretenden Fliehkraft ab. Gleichzeitig mit der Neigung des Wagenkastens um seinen Neigewinkel α wird der Stromabnehmer entgegen der Neigung des Wagenkastens zurückgeführt, wobei hierfür der Neigewinkel α berücksichtigt wird. Der Wankwinkel β wird bei der Führung des Stromabnehmers nicht berücksichtigt, so daß sich insbesondere bei Triebfahrzeugen, die aus Komfortgründen weich gefedert sind, große, möglicherweise sogar unzulässige Abweichungen für die Mittellage des Stromabnehmers zur Fahrdrahtebene, bzw. zum Lichtraumprofil des Schienenfahrzeugs ergeben können.

Ein weiteres Schienenfahrzeug mit einem neigbaren Wagenkasten ist durch die DE 32 32 153 C2 bekannt. Auf dem Dach des Wagenkastens ist ein Stromabnehmer angeordnet, der gelenkig mit einer am Drehgestell befestigten Säule verbunden ist. Der Stromabnehmer wird dadurch in einer bestimmten Lage im Verhältnis zum Drehgestell gehalten. Die Säule, die größtenteils innerhalb des Wagenkastens verläuft, geht durch das Dach des Wagenkastens hindurch. Auch in diesem Fall wird der Wankwinkel β bei der Führung des Stromabnehmers nicht berücksichtigt.

Aufgabe der vorliegenden Erfindung ist es, ein Schienenfahrzeug der eingangs genannten Art zu schaffen, bei dem der Stromabnehmer auch bei Kurvenfahrten annähernd mittig zum Fahrdraht ausrichtbar ist.

Die Aufgabe wird erfindungsgemäß durch die Merkmale im Anspruch 1 gelöst. Vorteilhafte Ausgestaltungen des Schienenfahrzeuges nach Anspruch 1 sind jeweils Gegenstand von weiteren Ansprüchen.

Das erfindungsgemäße Schienenfahrzeug umfaßt wenigstens einen um einen Neigewinkel α neigbaren Wagenkasten, der sich auf wenigstens einem Fahrwerk abstützt und auf dessen Dach wenigstens ein Stromabnehmer angeordnet ist. Der Stromabnehmer ist entgegen der Neigung des Wagenkastens um einen Stellwinkel γ rückführbar. Der Stellwinkel γ wird erfindungsgemäß aus der Differenz des Neigewinkels α und des Wankwinkels β gebildet.

Bei einem Schienenfahrzeug nach Anspruch 1 wird der Wankwinkel β bei der Führung des Stromabnehmers berücksichtigt. Die Stellgröße für den Stromabnehmer bildet damit nicht mehr ausschließlich der Neigewinkel α, sondern ein Stellwinkel γ, der aus der Differenz des Neigewinkels α und des Wankwinkels β gebildet ist. Dadurch ist sichergestellt, daß unabhängig von der Art der Fahrzeugfederung und der Art des Fahrwerks sowie unabhängig von auftretenden Fliehkräften bzw. Seitenwindeinwirkungen der Stromabnehmer bei einem geneigten Wagenkasten immer annähernd mittig zum Fahrdraht ausgerichtet ist. Durch die genauere Ausrichtung des Stromabnehmers zur Fahrdrahtebene wird die Kontaktgüte bei der Stromabnahme verbessert und der Verschleiß an der Schleifleiste des Stromabnehmers verringert.

Weitere Vorteile und Einzelheiten der Erfindung ergeben sich aus der nachfolgenden Beschreibung von Ausführungsbeispielen anhand der Zeichnung und in Verbindung mit weiteren Ansprüchen. Es zeigen:
- Fig. 1: einen Querschnitt durch eine erste Ausführungsform des erfindungsgemäßen Fahrzeugs im Bereich des Fahrwerks,
- Fig. 2: einen Querschnitt durch eine zweite Ausführungsform des erfindungsgemäßen Fahrzeugs im Bereich des Fahrwerks,
- Fig. 3: eine Seitenansicht einer mechanischen Stellvorrichtung für einen Stromabnehmer,
- Fig. 4: eine Seitenansicht einer weiteren mechanischen Stellvorrichtung für einen Stromabnehmer,
- Fig. 5: eine Seitenansicht einer hydraulischen Stellvorrichtung für einen Stromabnehmer.

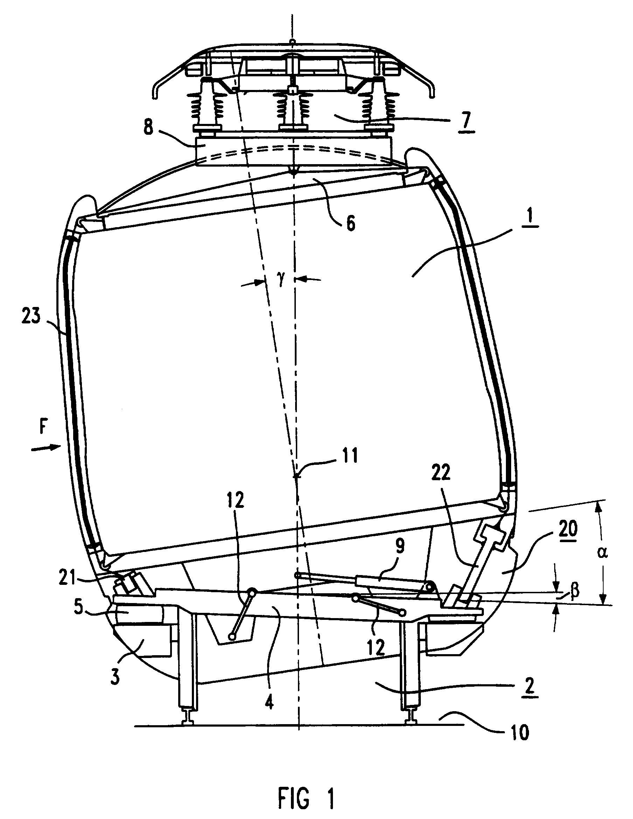

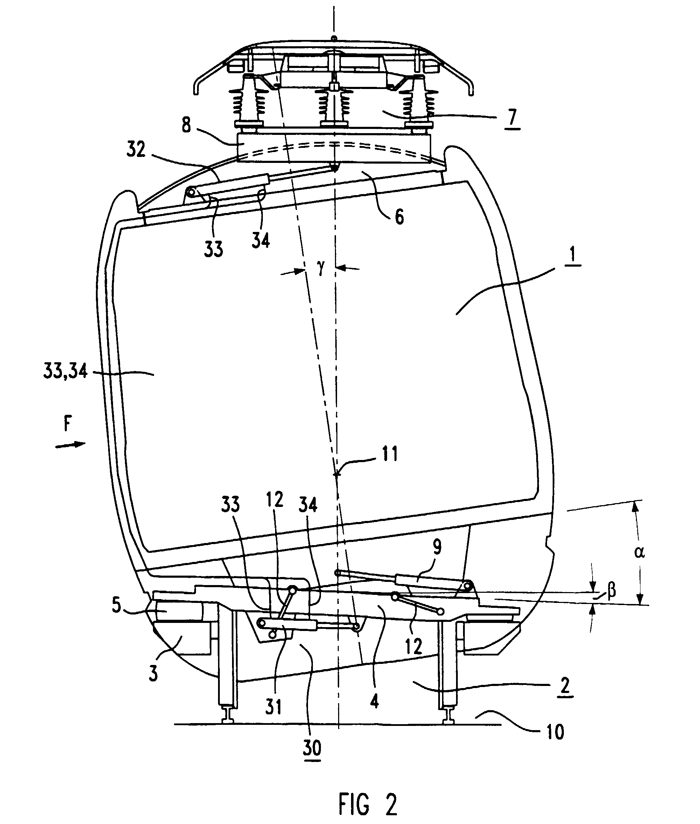

In Fig. 1 und 2 ist mit 1 ein Wagenkasten bezeichnet, der sich auf zwei Fahrwerken 2 abstützt. Die Fahrwerke 2 umfassen bei den in Fig. 1 ind 2 gezeigten Schienenfahrzeugen jeweils ein Drehgestell 3 und einen Pendelträger 4, der über eine Federung 5 federnd auf dem Drehgestell 3 abgestützt ist. Der Pendelträger 4 ist über ein Viergelenk 12 mit dem Wagenkasten 1 verbunden. In den Fig. 1 und 2 ist nur eines der beiden Fahrwerke 2 sichtbar. Auf dem Dach 6 des Wagenkastens 1 ist ein Stromabnehmer 7 mit seinem Träger 8 angeordnet.

Der Wagenkasten 1 ist bei Kurvenfahrt durch einen Stellantrieb 9 um einen Neigewinkel α gegen den Fahrweg 10 (Gleisoberkante) neigbar, wobei mit 11 der Neigepol des Wagenkastens 1 bezeichnet ist. Aufgrund der Fliehkraft F wird der Pendelträger 4 um einen Wankwinkel β zum Fahrweg 10 geneigt.

Der Stromabnehmer 7 ist entgegen der Neigung des Wagenkastens 1 um einen Stellwinkel γ rückführbar, wobei der Stellwinkel γ erfindungsgemäß aus der Differenz des Neigewinkels α und des Wankwinkels β gebildet wird.

Die Bildung des Stellwinkels γ kann z.B. durch eine aktive Regelung und/oder Steuerung erfolgen. In diesem Fall werden Regel- und/oder Steuersignale aus den Meßwerten einer Sensorik, die den Neigewinkel α und den Wankwinkel β erfassen, gebildet und an eine elektromotorische oder hydraulische Stellvorrichtung weitergeleitet. Besonders vorteilhaft ist es jedoch, eine passive Führung des Stromabnehmers 7 , d.h. eine Führung ohne Zwischenschaltung einer Regel- und/oder Steuereinrichtung vorzusehen.

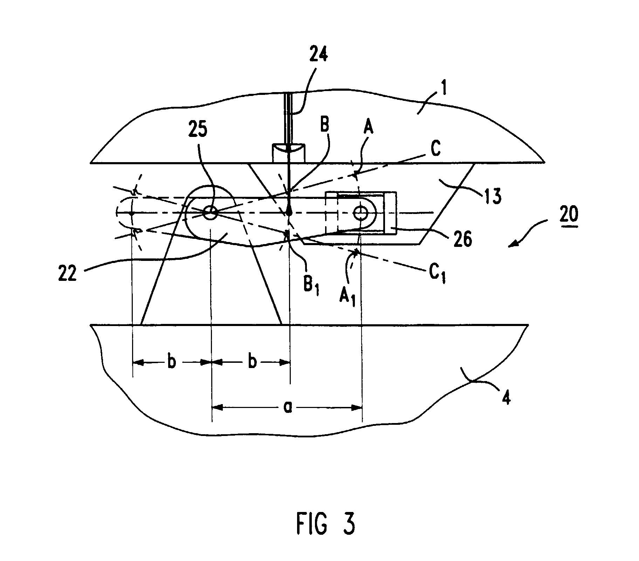

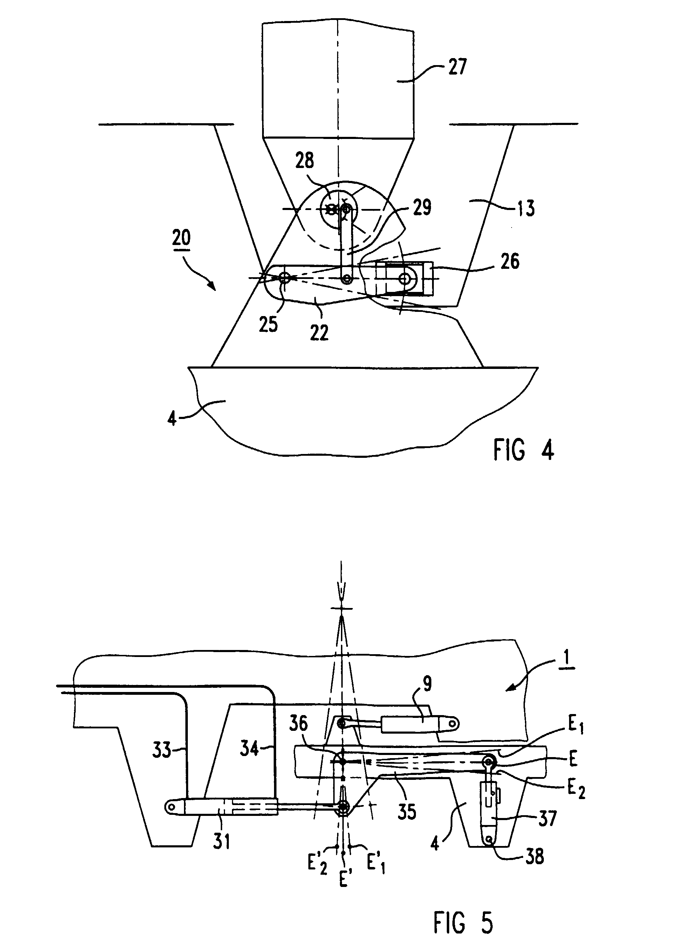

Bei dem in Fig. 1 dargestellten Schienenfahrzeug wird die Differenz des Neigewinkels α und des Wankwinkels β und damit der Stellwinkel γ durch eine mechanische Stellvorrichtung 20 gebildet, zu der in den Fig. 3 und 4 jeweils ein Ausführungsbeispiel gezeigt ist.

Das Schienenfahrzeug gemäß Fig. 2 weist eine hydraulische Stellvorrichtung 30 auf, die den Stellwinkel γ ebenfalls aus der Differenz des Neigewinkels α und des Wankwinkels β bildet und von der in Fig. 5 eine Ausführungsform im Detail dargestellt ist.

Die mechanische Stellvorrichtung 20 umfaßt bei dem in Fig. 1 dargestellten Schienenfahrzeug zwei Gelenkhebel 21 und 22, die mit ihrem einen Ende mit dem Wagenkasten 1 und ihrem anderen Ende mit dem Pendelträger 4 verbunden sind.

Die Gelenkhebel 21 und 22 arbeiten gegenläufig zueinander. Befindet sich z.B. der Gelenkhebel 22 in seiner oberen Position, dann befindet sich der Gelenkhebel 21 in seiner unteren Position.

Das im Wagenkasten 1 gelagerte Ende des Gelenkhebels 21 ist mit einem Seilzug 23 und das ebenfalls im Wagenkasten 1 gelagerte Ende des Gelenkhebels 22 ist mit einem Seilzug 24 verbunden. Beide Seilzüge 23 und 24 sind mit ihren freien Enden an den Träger 8 des Stromabnehmers 7 geführt.

Abhängig von der Stellung der beiden Gelenkhebel 21 und 22 wird bei dem in Fig. 1 gezeigten Schienenfahrzeug der Stromabnehmer 7 gegen die Neigung des Wagenkastens 1 um einen Stellwinkel γ zurückgeführt.

Aufgrund der Anordnung der Gelenkhebel 21 und 22 zwischen dem Wagenkasten 1 und dem Pendelträger 4 wird der Stellwinkel γ aus der Differenz des Neigewinkels α und des Wankwinkels β gebildet.

Bei dem in Fig. 3 dargestellten Ausführungsbeispiel ist der Gelenkhebel 22 der mechanischen Stellvorrichtung 20 an dem Pendelträger 4 drehbar und am Lager 13 des Wagenkastens 1 drehbar und verschiebbar gelagert. Neigt sich der Wagenkasten 1 zur Seite, so bewegt sich der Gelenkhebel 22 in die entsprechende Lage C bzw. C₁.

Der Seilzug 24 ist am Gelenkhebel 22 so angelenkt, daß durch entsprechende Hebelabstände a, b zum Hebeldrehpunkt 25 der Stellweg A-A₁ des Neigewinkels α in den Stellweg B-B₁ des Stellwinkels γ für den Stromabnehmer 7 umgeformt wird. Ein Ausgleich unterschiedlicher Stellweglängen für den Seilzug 24 kann in dem Stellweg B-B₁ enthalten sein. Hierzu kann der Gelenkhebel 22 auch durch einen Stellmotor 26 (Elektromotor oder Hydraulikmotor) analog zum Neigewinkel α des Wagenkastens 1 bewegt werden.

Der andere Teil der mechanischen Stellvorrichtung 20, die den Gelenkhebel 21 mit seinem Seilzug 23 umfaßt, ist identisch aufgebaut.

Anstelle der Seilzüge 23 und 24 kann die mechanische Stellvorrichtung 20 auch eine starre Verbindung 27 zum Träger 8 des Stromabnehmers 7 aufweisen (Fig. 4).

Die starre Verbindung 27 ist über eine Exzenterscheibe 28 und einen Exzenterarm 29 mit dem Gelenkhebel 22 verbunden. Die Exzenterscheibe 28 ist hierzu in der starren Verbindung 27 drehbar gelagert. Die Exzenterscheibe 28 kann im vorliegenden Fall auch motorisch betätigt werden.

Die hydraulische Stellvorrichtung 30 umfaßt bei dem in Fig. 2 dargestellten Schienenfahrzeug zwei Hydraulikzylinder 31 und 32. Der Hydraulikzylinder 31 ist mit seinem einen Ende drehbar im Lager 13 des Wagenkastens 1 und mit seinem anderen Ende (Hubstange) drehbar am Pendelträger 4 befestigt. Der Hydraulikzylinder 32 ist mit seinem einen Ende drehbar am Dach 6 des Wagenkastens 1 und mit seinem anderen Ende (Hubstange) drehbar am Träger 8 des Stromabnehmers 7 befestigt. Beide Hydraulikzylinder 31 und 32 sind durch Hydraulikleitungen 33 und 34, die einen in Fig. 1 nicht sichtbaren, gemeinsamen Ausgleichsbehälter aufweisen, miteinander verbunden.

Beide Hydraulikzylinder 31 und 32 wirken gleichsinnig, d.h. bei geneigtem Wagenkasten bewegen sich die Hubstangen aus den Hydraulikzylindern 31 und 32 heraus. Durch die Hydraulikleitungen 33 und 34 wird die Bewegung der Hubstange beim Hydraulikzylinder 31 gleichsinnig auf die Hubstange des Hydraulikzylinders 32 übertragen, wodurch der Träger 8 des Stromabnehmers 7 um einen Stellwinkel γ verstellt wird.

Aufgrund der Anordnung und Bemessung des Hydraulikzylinders 31 zwischen dem Wagenkasten 1 und dem Pendelträger 4 wird nur die Differenz zwischen dem Neigewinkel α des Wagenkastens 1, und dem Wankwinkel β als Stellgröße übertragen.

In Fig. 5 ist ein Ausführungsbeispiel für die hydraulische Stellvorrichtung 30 näher erläutert. Der Hydraulikzylinder 31 ist über einen Hebel 35, der am Pendelträger 4 in einem Gelenk 36 drehbar gelagert ist, mit einem Stellantrieb 37 (z.B. Elektro-Hubzylinder) verbunden. Der Stellantrieb 37 ist ebenfalls über ein Gelenk 38 am Pendelträger 4 drehbar befestigt. Eine Feinjustierung des Stellwinkels γ erfolgt bei der in Fig. 5 dargestellten hydraulischen Stellvorrichtung 30 durch eine Hubveränderung von E nach E₁ oder E₂, bzw. von E' nach E'₁ oder E'₂.

### Bezugszeichenliste

- 1: Wagenkasten
- 2: Fahrwerk
- 3: Drehgestell
- 4: Pendelträger
- 5: Federung
- 6: Dach
- 7: Stromabnehmer
- 8: Träger
- 9: Stellantrieb für die Neigung des Wagenkastens
- 10: Fahrweg
- 11: Neigepol des Wagenkastens
- 12: Viergelenk
- 13: Lager des Wagenkastens
- 20: mechanische Stellvorrichtung für die Neigung des Stromabnehmers
- 21,22: Gelenkhebel
- 23,24: Seilzug
- 25: Hebeldrehpunkt
- 26: Stellmotor
- 27: starre Verbindung
- 28: Exzenterscheibe
- 29: Exzenterarm
- 30: Hydraulische Stellvorrichtung für die Neigung des Stromabnehmers
- 31,32: Hydraulikzylinder
- 33,34: Hydraulikleitung
- 35: Hebel
- 36: Gelenk
- 37: Stellantrieb
- 38: Gelenk
- F: Fliehkraft
- α: Neigewinkel des Wagenkastens
- β: Wankwinkel (Pendelträger gegenüber Fahrweg)
- γ: Stellwinkel für die Neigung des Stromabnehmers

## Patentansprüche

1. Schienenfahrzeug, das folgende Merkmale umfaßt:
- wenigstens einen um einen Neigewinkel (α) neigbaren Wagenkasten (1), der sich auf wenigstens einem Fahrwerk (2) abstützt und auf dessen Dach (6) wenigstens ein Stromabnehmer (7) angeordnet ist, wobei
- der Stromabnehmer (7) entgegen der Neigung des Wagenkastens (1) um einen Stellwinkel (γ) rückführbar ist, der aus der Differenz des Neigewinkels (α) und des Wankwinkels (β) gebildet wird.

2. Schienenfahrzeug nach Anspruch 1, mit folgendem Merkmal:
- das Fahrwerk (2) umfaßt ein Drehgestell (3) mit einem gefederten Pendelträger (4).

3. Schienenfahrzeug nach Anspruch 1, mit folgendem Merkmal:
- der Stellwinkel (γ) wird von einer mechanischen Stellvorrichtung (20) erzeugt.

4. Schienenfahrzeug nach Anspruch 1, mit folgendem Merkmal:
- der Stellwinkel (γ) wird von einer hydraulischen Stellvorrichtung (30) erzeugt.

5. Schienenfahrzeug nach Anspruch 3,mit folgendem Merkmal:
- die mechanische Stellvorrichtung umfaßt wenigstens zwei Gelenkhebel (21,22), die zwischen dem Wagenkasten (1) und dem Pendelträger (4) angeordnet sind und die über jeweils wenigstens einen Seilzug (23,24) mit dem Stromabnehmer (7) verbunden sind.

6. Schienenfahrzeug nach Anspruch 4,mit folgendem Merkmal:
- die hydraulische Stellvorrichtung (30) umfaßt wenigstens zwei Hydraulikzylinder (31,32), wobei der eine Hydraulikzylinder (31) zwischen dem Wagenkasten (1) und dem Pendelträger (4) angeordnet ist und der andere Hydraulikzylinder (32) am Dach (6) des Wagenkastens (1) befestigt und mit dem Stromabnehmer (7) verbunden ist.

7. Schienenfahrzeug nach Anspruch 4,mit folgendem Merkmal:
- zur Feinjustierung des Stellwinkels (γ) ist ein Stellantrieb (37) vorgesehen.

## Claims

1. Rail vehicle which includes the following features:
- at least one superstructure (1) which can be tilted by an angle of tilt (α) and is supported on at least one undercarriage (2) and on whose roof (6) at least one current collector (7) is arranged, wherein
- the current collector (7) can be retracted in opposition to the tilt of the superstructure (1) by an adjustment angle (γ) which is formed by the difference between the angle of tilt (α) and the roll angle (β).

2. Rail vehicle according to claim 1, having the following feature:
- the undercarriage (2) includes a bogie (3) with a spring-mounted pendulum carrier (4).

3. Rail vehicle according to claim 1, having the following feature:
- the adjustment angle (γ) is generated by a mechanical adjusting device (20).

4. Rail vehicle according to claim 1, having the following feature:
- the adjustment angle (γ) is generated by a hydraulic adjusting device (30).

5. Rail vehicle according to claim 3, having the following feature:
- the mechanical adjusting device includes at least two articulated levers (21, 22) which are arranged between the superstructure (1) and the pendulum carrier (4) and are connected to the current collector (7) by way of, in each case, at least one cable line (23, 24).

6. Rail vehicle according to claim 4, having the following feature:
- the hydraulic adjusting device (30) includes at least two hydraulic cylinders (31, 32), with the one hydraulic cylinder (31) being arranged between the superstructure (1) and the pendulum carrier (4) and with the other hydraulic cylinder (32) being secured to the roof (6) of the superstructure (1) and being connected to the current collector (7).

7. Rail vehicle according to claim 4, having the following feature:
- an actuator (37) is provided for precision adjustment of the adjustment angle (γ).

## Revendications

1. Véhicule sur rails, qui comporte les caractéristiques suivantes :
- au moins une caisse (1) de wagon, pouvant être inclinée d'un angle (α) d'inclinaison, qui s'appuie sur au moins un bogie (2) et sur le toit (6) de laquelle est disposé au moins un pantographe (7),
- le pantographe (7) pouvant être ramené, à l'encontre de l'inclinaison de la caisse (1) de wagon, d'un angle (γ) de réglage qui est formé par la différence entre l'angle (α) d'inclinaison et l'angle (β) de roulis.

2. Véhicule sur rails suivant la revendication 1, comportant la caractéristique suivante :
le bogie (2) comprend un cadre (3) de bogie pourvu d'un support (4) oscillant suspendu sur ressorts.

3. Véhicule sur rails suivant la revendication 1, comportant la caractéristique suivante :
l'angle (γ) de réglage est produit par un dispositif (20) de réglage mécanique.

4. Véhicule sur rails suivant la revendication 1, comportant la caractéristique suivante :
l'angle (γ) de réglage est produit par un dispositif (30) de réglage hydraulique.

5. Véhicule sur rails suivant la revendication 3, comportant la caractéristique suivante :
le dispositif de réglage mécanique comprend au moins deux leviers (21, 22) articulés, qui sont disposés entre la caisse (1) de wagon et le support (4) oscillant et qui sont respectivement reliés par l'intermédiaire d'au moins un tirant (23, 24) à câble au pantographe (7).

6. Véhicule sur rails suivant la revendication 4, comportant la caractéristique suivante :
le dispositif (30) de réglage hydraulique comprend au moins deux vérins (31, 32) hydrauliques, l'un (31) des vérins hydrauliques étant disposé entre la caisse (1) de wagon et le support (4) oscillant et l'autre (32) vérin hydraulique étant fixé sur le toit (6) de la caisse (1) de wagon et relié au pantographe (7).

7. Véhicule sur rails suivant la revendication 4, comportant la caractéristique suivante :
un servomoteur (37) est prévu pour l'ajustement fin de l'angle (γ) de réglage.
